# EUROPEAN PATENT APPLICATION

(11) **EP 2 783 740 A1**
(43) Date of publication of application: **01.10.2014**
(21) Application number: 12848373.2
(22) Date of filing: 08.11.2012
(51) Int. Cl.: B01D 53/28, B01J 20/08, B01J 20/10, B01J 20/12, B01J 20/28, B01J 20/30

(54) **WATER-SELECTIVE ADSORBENT AND METHOD FOR PRODUCING SAME**

(30) Priority: 11.11.2011 JP 2011247329
(71) Applicant: WASEDA UNIVERSITY, Shinjuku-ku, Tokyo 169-8050 (JP); NGK Insulators, Ltd., Nagoya-shi, Aichi 467-8530 (JP)
(72) Inventor: YAMAZAKI Atsushi, Tokyo 169-8050 (JP); HISHIKI Tatsuya, Nagoya-shi Aichi 467-8530 (JP)
(74) Representative: TBK
(86) International application number: PCT/JP2012/078931
(87) International publication number: WO 2013/069719

(57) **Abstract**

The present invention relates to a water-selective adsorbent and a method for producing the water-selective adsorbent. The water-selective adsorbent comprises: a water-selective adsorbent main body (18) that comprises a porous body (14) having a plurality of pores (12) and at least one kind of deliquescent substance (16) contained (supported) within the pores (12) of the porous body (14); and a moisture-permeable film (20) that is formed on the surface of the water-selective adsorbent main body (18) so as to block up at least the pores (12). Consequently, loss (outflow) of the deliquescent substance such as lithium chloride can be suppressed even if adsorption and desorption of moisture are repeated, so that decrease in the moisture adsorption ability can be suppressed.

## Description

### Technical Field

The present invention relates to a water-selective adsorbent, which is capable of adsorbing water from the atmosphere and releasing (desorbing) the adsorbed water, and further relates to a method for producing the same.

### Background Art

Conventional water adsorbents for adsorbing water from the atmosphere (i.e., desiccant materials) include porous zeolites and silica gels. Such porous solids utilize only surface adsorption and capillary condensation phenomena for adsorbing water.

A water adsorbent, which uses a deliquescent substance such as LiCl (lithium chloride) in pores of a porous solid, has been proposed (see, e.g., Japanese Patent No. 4119668 and Japanese Laid-Open Patent Publication No. 2009-226265). In the water adsorbent described in these patent documents, for example, the deliquescent substance deliquesces due to water vapor from the atmosphere, and is condensed into an LiCl solution. Therefore, the water adsorption capacity of the water adsorbent described in these patent documents is 3 to 4 times larger than the water adsorption capacity of the above-described conventional water adsorbents that make use of a porous solid.

### Summary of Invention

However, in the water adsorbent described in Japanese Patent No. 4119668 and Japanese Laid-Open Patent Publication No. 2009-226265, etc., in a case in which water adsorption and desorption are repeatedly carried out, the deliquescent substance such as lithium chloride is lost (leaked), such that the adsorption ability of the deliquescent substance is reduced disadvantageously.

In view of the above problem, an object of the present invention is to provide a water-selective adsorbent and a method for producing the same, which are capable of preventing loss (leakage) of a deliquescent substance such as lithium chloride and a reduction in the water adsorption ability, even in the case of repeated water adsorption and desorption.
[1] According to a first aspect of the present invention, a water-selective adsorbent is provided comprising a water-selective adsorbent body and a water-permeable membrane. The water-selective adsorbent body contains a porous solid having a large number of pores, and at least one deliquescent substance located in the pores of the porous solid. The water-permeable membrane is formed on a surface of the water-selective adsorbent body in such a manner that at least the pores thereof are closed.
   In this structure, even in a case in which water adsorption and desorption are carried out repeatedly, loss (leakage) of the deliquescent substance such as lithium chloride can be prevented, and a reduction in the water adsorption ability can be prevented.
[2] In the first aspect, the water-permeable membrane preferably has a thickness of 30 to 505 µm. The thickness more preferably is 30 to 300 µm, further preferably, is 45 to 170 µm, particularly preferably, is 80 to 130 µm, and more particularly preferably, is 90 to 110 µm.
[3] In the first aspect, the pores in the water-selective adsorbent body preferably have an average diameter of 2.0 to 10.6 µm. The average diameter more preferably is 3.4 to 9 µm, and further preferably, is 5 to 7.6 µm.
[4] In the first aspect, the water-permeable membrane preferably includes a material containing a binding agent and a water-selective permeating agent capable of selectively permeating water molecules.
[5] In the first aspect, the water-selective permeating agent preferably contains one of A-type zeolite, X-type zeolite, Y-type zeolite, P-type zeolite, mordenite, clinoptilolite, allophane, imogolite, and activated carbon.
[6] In aspect [4] or [5], the binding agent may contain a combination of a first binder and a second binder, wherein the first binder is water glass, and the second binder is a binder corresponding to the water glass.
[7] In aspect [6], the combination of the first binder and the second binder may be a combination in which the first binder is Li₄SiO₄ and the second binder is LiOH, a combination in which the first binder is Na₂SiO₃ and the second binder is NaOH, a combination in which the first binder is K₂SiO₃ and the second binder is KOH, a combination in which the first binder is CaSiO₃, Ca₂SiO₄, or Ca₃SiO₅ and the second binder is Ca(OH)₂, or a combination in which the first binder is Mg₂Si₃O₈ and the second binder is Mg(OH)₂.
[8] In the first aspect, the porous solid preferably contains one of silica gel, calcined alumina, calcined sepiolite, calcined halloysite, calcined allophane, calcined palygorskite, and calcined cordierite.
[9] In the first aspect, the deliquescent substance preferably contains one of calcium chloride, magnesium chloride, lithium chloride, sodium chloride, potassium chloride, and lithium bromide.
[10] According to a second aspect of the present invention, a method is provided for producing a water-selective adsorbent. The method comprises a body preparation step of preparing a water-selective adsorbent body containing a porous solid having a large number of pores, and at least one deliquescent substance located in the pores of the porous solid, and a membrane formation step of forming a water-permeable membrane on a surface of the water-selective adsorbent body in such a manner that at least the pores thereof are closed.
[11] In the second aspect, the membrane formation step may further comprise a first drying step of drying the water-selective adsorbent body, a coating step of coating the water-selective adsorbent body with a material containing a binding agent and a water-selective permeating agent capable of selectively permeating water molecules, and a second drying step of drying the water-selective adsorbent body which is coated with the material.
[12] In aspect [11], the binding agent may contain a combination of a first binder and a second binder, and the coating step may further comprise a gel preparation step of preparing a gel containing the water-selective permeating agent and the first binder, a first immersion step of immersing (including dip-coating) the water-selective adsorbent body in the gel, and a second immersion step of immersing (including dip-coating) the water-selective adsorbent body in a solution of the second binder.
[13] In aspect [12], the water-selective permeating agent preferably contains one of A-type zeolite, X-type zeolite, Y-type zeolite, P-type zeolite, mordenite, clinoptilolite, allophane, imogolite, and activated carbon.
[14] In aspect [12], the first binder may be water glass, and the second binder may be a binder corresponding to the water glass.
[15] In aspect [14], the combination of the first binder and the second binder may be a combination in which the first binder is Li₄SiO₄ and the second binder is LiOH, a combination in which the first binder is Na₂SiO₃ and the second binder is NaOH, a combination in which the first binder is K₂SiO₃ and the second binder is KOH, a combination in which the first binder is CaSiO₃, Ca₂SiO₄, or Ca₃SiO₅ and the second binder is Ca(OH)₂, or a combination in which the first binder is Mg₂Si₃O₈ and the second binder is Mg(OH)₂.
[16] In the second aspect, the porous solid preferably contains one of silica gel, calcined alumina, calcined sepiolite, calcined halloysite, calcined allophane, calcined palygorskite, and calcined cordierite.

### Advantage of Invention

As described above, in the water-selective adsorbent and the production method according to the present invention, even in a case in which water adsorption and desorption are carried out repeatedly, loss (leakage) of the deliquescent substance such as lithium chloride can be prevented, and a reduction in the water adsorption ability can be prevented.

### Brief Description of Drawings

FIG. 1A is a cross-sectional view of the structure of a water-selective adsorbent according to an embodiment, and FIG. 1B is a cross-sectional view of the water-selective adsorbent in which water is adsorbed;
FIG. 2 is a process chart of a method for producing the water-selective adsorbent according to the embodiment;
FIG. 3 is a process chart of a body preparation step S1 shown in FIG. 2;
FIG. 4 is a process chart of a membrane formation step S2 shown in FIG. 2;
FIG. 5 is a graph illustrating adsorbed water amounts, which vary with average pore diameters of water-selective adsorbent bodies according to samples 1 through 4;
FIG. 6 is a graph illustrating differences, expressed in terms of water mass ratios (wt%), between initial adsorbed water amounts and adsorbed water amounts after an endurance test according to an Example and a Comparative Example;
FIG. 7 is a graph illustrating differences, expressed in terms of densities, between initial adsorbed water amounts and adsorbed water amounts after an endurance test according to the Example and the Comparative Example;
FIG. 8 is a graph illustrating differences, expressed in terms of water mass ratios (wt%), between initial adsorbed water amounts and adsorbed water amounts after an endurance test, which vary with thicknesses of water-permeable membranes, in the Comparative Example and in Examples 1 to 5; and
FIG. 9 is a graph illustrating differences, expressed in terms of densities, between initial adsorbed water amounts and adsorbed water amounts after the endurance test, which vary with thicknesses of the water-permeable membranes, in the Comparative Example and in Examples 1 to 5.

### Description of Embodiments

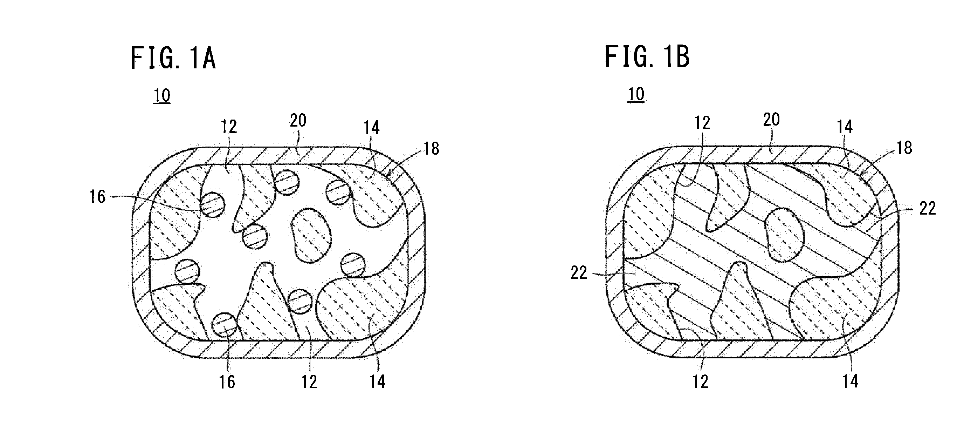

An embodiment of a water-selective adsorbent and a production method according to the present invention will be described below with reference to FIGS. 1 to 9.

As shown in FIG. 1A, a water-selective adsorbent 10 according to the present embodiment contains a water-selective adsorbent body 18 and a water-permeable membrane 20. The water-selective adsorbent body 18 contains a porous solid 14 having a large number of pores 12, and at least one deliquescent substance 16 located (supported) in the pores 12 of the porous solid 14. The water-permeable membrane 20 is formed on a surface of the water-selective adsorbent body 18 in such a manner that at least the pores 12 thereof are closed. In the example of the present embodiment, the water-permeable membrane 20 is formed over the entire surface of the water-selective adsorbent body 18 including the openings of the pores 12.

During a water adsorption and desorption cycle in the water-selective adsorbent 10, in an initial water adsorption stage, as shown in FIG. 1A, the deliquescent substance 16 is supported on the pores 12 of the porous solid 14. Then, water in the air is absorbed by the deliquescent substance 16, and wall surfaces of the pores 12 in the porous solid 14 become wetted with water. In a final stage, as shown in FIG. 1B, the pores 12 in the porous solid 14 become filled with water 22. Thereafter, the water 22 is desorbed, whereby the water-selective adsorbent 10 is returned to the initial state shown in FIG. 1A. The aforementioned adsorption and desorption cycle may be repeated in this manner. Incidentally, to facilitate understanding, the sizes of the pores 12, the deliquescent substance 16, and the like in the water-selective adsorbent 10 are shown in an exaggerated form in FIGS. 1A and 1B.

The porous solid 14 contains one of silica gel, calcined alumina, calcined sepiolite, calcined halloysite, calcined allophane, calcined palygorskite, and calcined cordierite.

The deliquescent substance 16 contains one of calcium chloride, magnesium chloride, lithium chloride, sodium chloride, potassium chloride, and lithium bromide.

The water-permeable membrane 20 includes a material containing a binding agent, and a water-selective permeating agent that is capable of selectively permeating water molecules.

Specifically, the water-selective permeating agent contains one of A-type zeolite, X-type zeolite, Y-type zeolite, P-type zeolite, mordenite, clinoptilolite, allophane, imogolite, and activated carbon.

Meanwhile, the binding agent contains a combination of a first binder and a second binder, in which the first binder is water glass, and the second binder is a binder corresponding to the water glass. Examples of such combinations include the following:
(a) the first binder is Li₄SiO₄ and the second binder is LiOH;
(b) the first binder is Na₂SiO₃ and the second binder is NaOH;
(c) the first binder is K₂SiO₃ and the second binder is KOH;
(d) the first binder is CaSiO₃, Ca₂SiO₄, or Ca₃SiO₅ and the second binder is Ca(OH)₂; and
(e) the first binder is Mg₂Si₃O₈ and the second binder is Mg(OH)₂.

It should be understood that the binding agent may contain two or more of such combinations of (a) to (e), such as a combination of (a) and (b) or a combination of (a), (b), and (c).

In addition to the aforementioned combinations, the binding agent may contain Ca (calcium) cement, Mg (magnesium) cement, gypsum, magnesium phosphate, etc.

The water-selective adsorbent 10 according to the present embodiment contains the water-selective adsorbent body 18 and the water-permeable membrane 20. The water-selective adsorbent body 18 contains the porous solid 14 having a large number of pores 12, and at least one deliquescent substance 16 located in the pores 12 of the porous solid 14. The water-permeable membrane 20 is formed on the surface of the water-selective adsorbent body 18 in such a manner that at least the pores 12 thereof are closed. Consequently, even in a case in which water adsorption and desorption are carried out repeatedly, loss (leakage) of the deliquescent substance 16 such as lithium chloride can be prevented, and a reduction in the water adsorption ability can be prevented.

The thickness of the water-permeable membrane 20 may be 30 to 505 µm, preferably, is 30 to 300 µm, more preferably, is 45 to 170 µm, further preferably, is 80 to 130 µm, and particularly preferably, is 90 to 110 µm. If the thickness of the water-permeable membrane 20 is excessively small, the water-permeable membrane 20 may easily become broken during adsorption and desorption of water, and the deliquescent substance 16 may be lost (leaked). On the other hand, if the thickness of the water-permeable membrane 20 is excessively large, water cannot readily be introduced into the pores 12 of the water-selective adsorbent body 18, leading to a reduction in the amount of water that is adsorbed or desorbed per unit time.

The average diameter of the pores 12 in the water-selective adsorbent body 18 preferably is 2.0 to 10.6 µm, more preferably, is 3.4 to 9 µm, and further preferably, is 5 to 7.6 µm. If the average diameter of the pores 12 is excessively small, the deliquescent substance 16 cannot be distributed sufficiently in the pores 12. On the other hand, if the average diameter of the pores 12 is excessively large, the deliquescent substance 16, which is located in the pores 12, may leak out from the pores, for example, during a process of washing the water-selective adsorbent body 18 while carrying out the production method. For example, the average diameter of the pores 12 can be measured using a mercury intrusion method (mercury intrusion porosimeter).

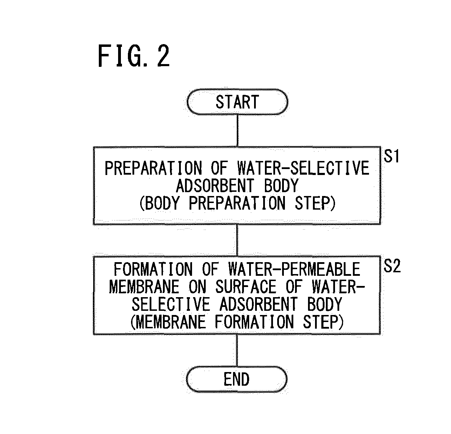

A method for producing the water-selective adsorbent 10 according to the present embodiment will be described below with reference to FIGS. 2 to 4.

As shown in FIG. 2, the production method includes a body preparation step S1 of preparing the water-selective adsorbent body 18, which contains the porous solid 14 having a large number of pores 12, and at least one deliquescent substance 16 located in the pores 12 of the porous solid 14. The production method further includes a membrane formation step S2 of forming the water-permeable membrane 20 on the surface of the water-selective adsorbent body 18 in such a manner that at least the pores 12 thereof are closed.

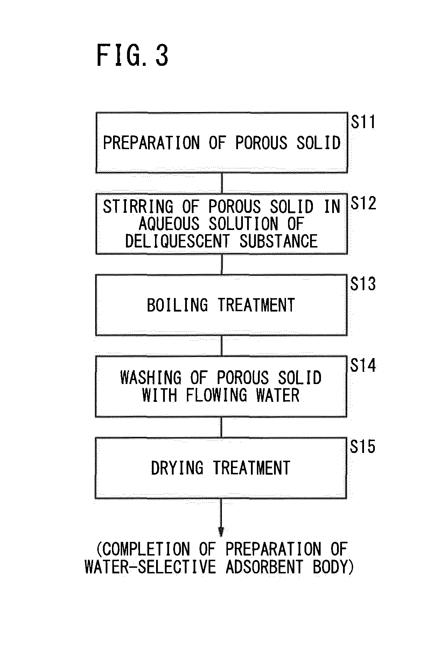

During the body preparation step S1, in step S11 of FIG. 3, for example, a porous material is crushed to prepare the porous solid 14 having a predetermined size (e.g., 3 mm square to 50 mm square). Then, in step S12, the porous solid 14 is introduced to an aqueous solution containing 30 to 50 wt% of the deliquescent substance 16, and the solution is stirred for 10 to 15 hours.

In step S13, the porous solid 14 in the aqueous solution of the deliquescent substance 16 is subjected to a boiling treatment (at a temperature of 95 °C to 105 °C for 10 to 30 minutes). By a boiling treatment, the deliquescent substance 16 is brought into a supported condition on the pores 12 of the porous solid 14.

In step S14, after the boiling treatment, the porous solid 14 (with the deliquescent substance 16) is washed with flowing water. Then, in step S15, the resultant product is dried (at a temperature of 110 °C to 130 °C for 45 to 50 hours) in order to obtain the water-selective adsorbent body 18.

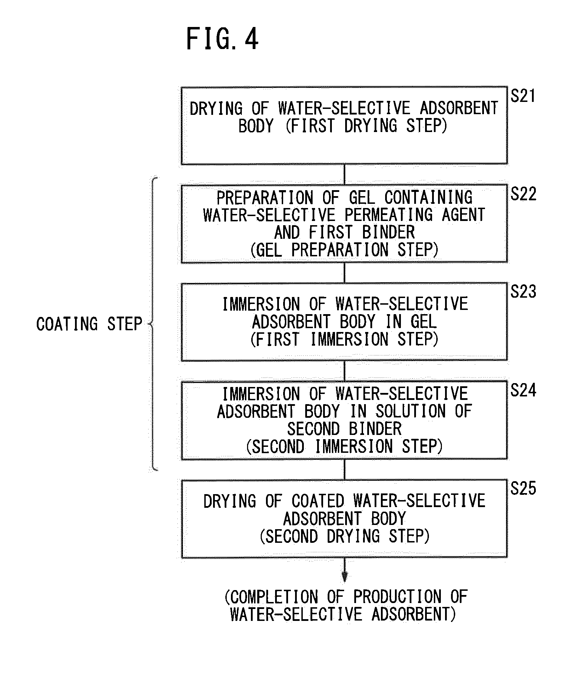

During the membrane formation step S2, in step S21 (first drying step) of FIG. 4, the water-selective adsorbent body 18 is dried (at a temperature of 110 °C to 130 °C for 22 to 26 hours).

In steps S22 to S24 (coating step), the surface of the water-selective adsorbent body 18 is coated with a material containing the binding agent, and the water-selective permeating agent that is capable of selectively permeating water molecules.

More specifically, in step S22 (gel preparation step), a gel containing the water-selective permeating agent and the first binder is prepared. Then, in step S23 (first immersion step), the water-selective adsorbent body 18 is immersed in the gel. During the immersion treatment, the water-selective adsorbent body 18 may be immersed in the gel for several seconds to 20 minutes. Alternatively, the immersion treatment may be a dipping treatment, in which the water-selective adsorbent body 18 is immersed in the gel for several seconds and then pulled out of the gel over a period of 3 to 20 minutes.

In step S24 (second immersion step), the water-selective adsorbent body 18 is immersed in the second binder. During the immersion treatment, the water-selective adsorbent body 18 may be immersed in a solution of the second binder for several seconds to 20 minutes. Alternatively, the immersion treatment may be a dipping treatment, in which the water-selective adsorbent body 18 is immersed in the solution of the second binder for several seconds and then pulled out of the solution over a period of 3 to 20 minutes.

After the above steps S22 to S24 (coating step) have been carried out, in step S25 (second drying step), the water-selective adsorbent body 18, which is coated with the material, is dried (at a temperature of 110 °C to 130 °C for 0.5 to 2 hours).

The water-selective adsorbent 10 according to the present embodiment can be easily produced in the above-described manner. The water-selective adsorbent 10, which is produced in the foregoing manner, contains the water-selective adsorbent body 18 including the porous solid 14 having a large number of pores 12, and at least one deliquescent substance 16, which is located (supported) in the pores 12 of the porous solid 14. The water-selective adsorbent 10 further contains the water-permeable membrane 20, which is formed on the surface of the water-selective adsorbent body 18 in such a manner that at least the pores 12 thereof are closed.

### Examples

### [First Example]

In samples 1 to 4, the adsorbed water amounts, which varied with the average diameters of the pores 12 in the water-selective adsorbent bodies 18, were evaluated. The adsorbed water amounts were compared in an environment most suitable for water adsorption, i.e., under a relative humidity of 90%.

### (Sample 1)

A porous solid of a calcined alumina (a porous alumina ceramic solid), which had pores 12 having an average diameter of 0.5 µm, was crushed to prepare a porous solid 14 having a size of 5 mm square and a weight of 5 g. Then, the 5 mm square porous solid 14 was introduced into an aqueous solution containing 40% by mass (wt%) of lithium chloride (LiCl), stirred for 12 hours, and boiled (at 100 °C for 20 minutes) in the 40 wt% aqueous solution of lithium chloride (LiCl). The porous solid 14 was washed with flowing water and dried (at 120 °C for 48 hours) in order to prepare the water-selective adsorbent body 18 of sample 1.

### (Samples 2 to 4)

The water-selective adsorbent bodies 18 of samples 2, 3, and 4 were prepared in the same manner as the water-selective adsorbent bodies 18 of sample 1, except that the pores 12 in the porous solids 14 had diameters of 3.4 µm, 8.9 µm, and 13.8 µm, respectively.

### (Evaluation)

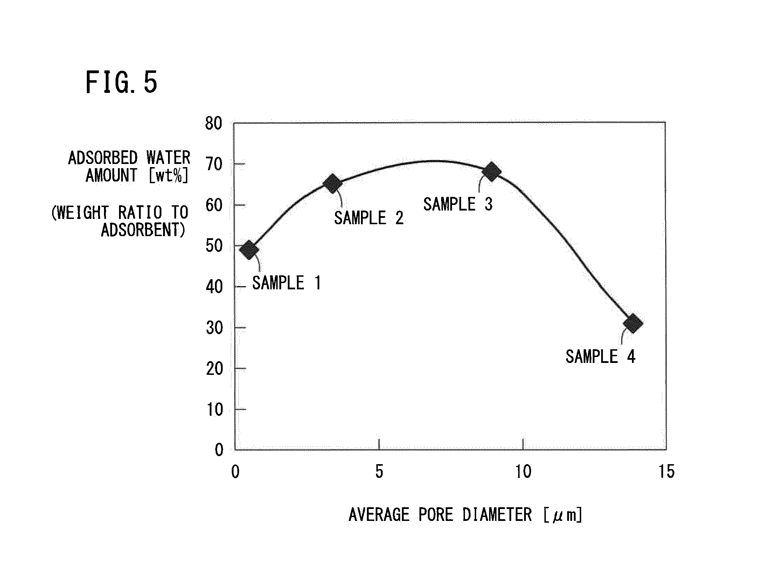

After water was adsorbed at a relative humidity of 90% under a saturated water vapor pressure at 25 °C for 48 hours, the adsorbed water amount of each of samples 1 to 4 was measured. The mass ratio of the adsorbed water to the water-selective adsorbent body 18 was obtained as the adsorbed water amount. Thus, the mass percentage (wt%) of the adsorbed water was obtained based on 100% by mass of the water-selective adsorbent body 18. The evaluation results are shown in FIG. 5.

As made clear from the evaluation results, the average diameter of the pores 12 in the water-selective adsorbent body 18 preferably is 2.0 to 10.6 µm, more preferably, is 3.4 to 9 µm, and further preferably, is 5 to 7.6 µm.

### [Second Example]

In the Example and the Comparative Example, a difference between the initial adsorbed water amount and the adsorbed water amount after an endurance test were evaluated.

### (Comparative Example)

A porous solid of calcined silica (a porous silica ceramic solid), which had pores 12 with an average diameter of 5.1 µm, was crushed in order to prepare a porous solid 14 having a size of 5 mm square. The 5 mm square porous solid 14 was introduced into an aqueous solution containing 40% by mass (wt%) of lithium chloride (LiCl), stirred for 12 hours, and boiled (at 100 °C for 20 minutes) in a 40 wt% aqueous solution of lithium chloride (LiCl). The porous solid 14 was washed with flowing water and dried (at 120 °C for 48 hours) in order to prepare the water-selective adsorbent of the Comparative Example.

### (Example)

In the same manner as the Comparative Example, a porous solid of calcined silica (a porous silica ceramic solid), which had pores 12 with an average diameter of 5.1 µm, was crushed in order to prepare a porous solid 14 having a size of 5 mm square. Then, the 5 mm square porous solid 14 was introduced into an aqueous solution containing 40% by mass (wt%) of lithium chloride (LiCl), stirred for 12 hours, and boiled (at 100 °C for 20 minutes) in the 40 wt% aqueous solution of lithium chloride (LiCl). The porous solid 14 was washed with flowing water and dried (at 120 °C for 48 hours) in order to prepare the water-selective adsorbent body 18 of the Example.

Thereafter, the water-selective adsorbent body 18 was dried (at 120 °C for 24 hours). Meanwhile, 20 ml of lithium silicate (Li₄SiO₄) and 15 g of A-type zeolite (molecular sieves 4A available from Tosoh Corporation) were mixed and stirred for 30 minutes in order to prepare a gel. The water-selective adsorbent body 18 was subjected to an immersion treatment in the gel (an immersion treatment for several seconds to 10 minutes or a dip coating treatment). The water-selective adsorbent body 18 was taken out from the gel and subjected to an immersion treatment in a solution containing 2 to 3 wt% of lithium hydroxide (LiOH) (an immersion treatment for several seconds to 10 minutes or a dip coating treatment). Thereafter, the water-selective adsorbent body 18 was separated from the lithium hydroxide (LiOH) solution and dried (at 120 °C for 0.5 to 1 hour) in order to produce the water-selective adsorbent of the Example having a 100 µm thick water-permeable membrane 20 formed on the water-selective adsorbent body 18.

### (Measurement of Initial Adsorbed Water Amount)

The initial adsorbed water amount of the water-selective adsorbent of the Comparative Example was measured while increasing the relative humidity by 5% within a range of 5% to 90%.

In addition, the initial adsorbed water amount of the water-selective adsorbent of the Example was measured while increasing the relative humidity by 5% within a range of 5% to 90%.

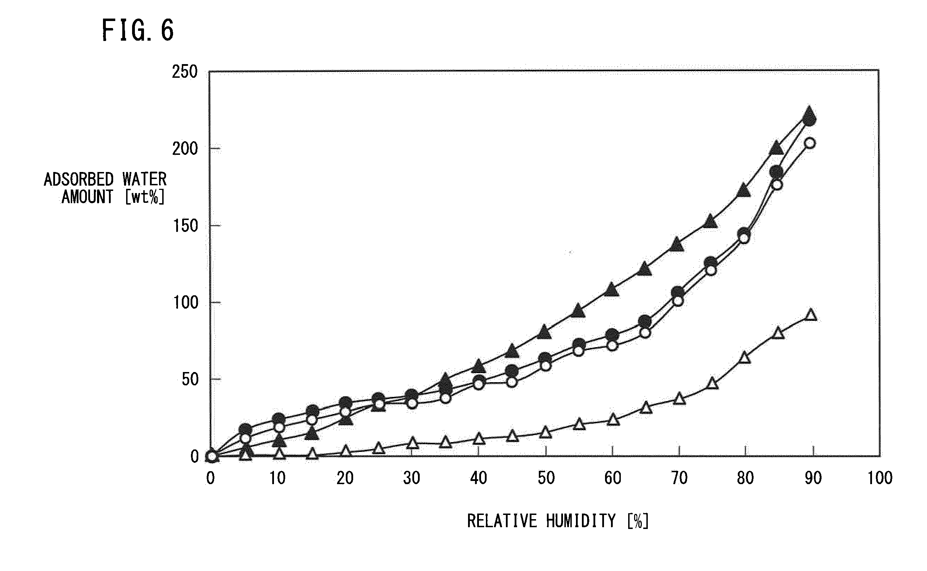

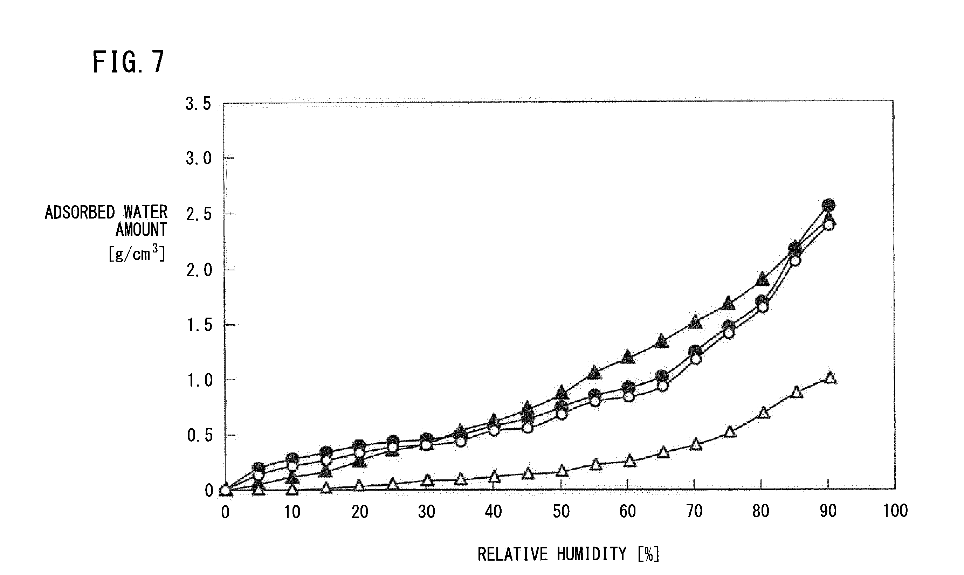

The mass ratios of the adsorbed water to the water-selective adsorbent, and densities, which were converted from the mass ratios, were obtained as initial adsorbed water amounts of the Comparative Example and the Example. Thus, based on 100% by mass of the water-selective adsorbent, the mass percentage (wt%) of the adsorbed water was obtained as the mass ratio. The density was calculated using the formula (water mass ratio (percentage)/100) x (weight of water-selective adsorbent/volume of water-selective adsorbent). Evaluation results of the initial adsorbed water amounts of the Comparative Example are shown by the plotted black triangles ▲, and evaluation results of the initial adsorbed water amounts of the Example are shown by the plotted black circles ● in FIGS. 6 and 7.

### (Endurance Test)

Each of the water-selective adsorbents of the Comparative Example and the Example was stored at 25 °C for 48 hours (in a water adsorption process), and then was stored at 120 °C for 48 hours (in a water desorption process) under a saturated water vapor pressure. The water adsorption and desorption cycle was repeated 10 times.

### (Measurement of Adsorbed Water Amount After Endurance Test)

The adsorbed water amounts of the water-selective adsorbent of the Comparative Example after the endurance test were measured while increasing the relative humidity by 5% within a range of 5% to 90%.

In addition, the adsorbed water amounts of the water-selective adsorbent of the Example after the endurance test were measured while increasing the relative humidity by 5% within a range of 5% to 90%.

The adsorbed water amounts (water mass ratios and densities) of the Comparative Example and the Example after the endurance test were obtained in the same manner as the initial adsorbed water amounts. Evaluation results of the adsorbed water amounts after the endurance test of the Comparative Example are shown by the plotted white triangles Δ, whereas evaluation results of the adsorbed water amounts after the endurance test of the Example are shown by the plotted white circles ○ in FIGS. 6 and 7.

### (Evaluation)

As shown in FIGS. 6 and 7, in the Comparative Example, the adsorbed water amounts were reduced by the endurance test to about 10% of the initial amounts in a relative humidity range of 0% to 10%, to about 12.5% to 39% of the initial amounts in a relative humidity range of 0% to 10%, and to about 40% of the initial amounts at a relative humidity of 90%.

In contrast, in the Example, the adsorbed water amounts were reduced by the endurance test to about 71% and 78% of the initial amounts at relative humidity of 5% and 10%, respectively, and to about 82% to 96% of the initial amounts at other relative humidity. On average, the adsorbed water amounts were reduced to about 90% of the initial amounts.

### (Consideration)

It is presumed that the amount of water reduction observed after the endurance test in the Second Example was caused by leakage of the deliquescent substance 16 (LiCl) from the pores 12 in the water-selective adsorbent body 18. As made clear from the evaluation results of the Example, leakage of the deliquescent substance 16 can be prevented by the water-permeable membrane 20 that is formed on the surface of the water-selective adsorbent body 18.

### [Third Example]

In the Comparative Example and in Examples 1 to 5, differences between the initial adsorbed water amounts and the adsorbed water amounts after an endurance test were evaluated using various thicknesses of the water-permeable membranes.

### (Comparative Example)

The water-selective adsorbent of the Comparative Example was produced in the same manner as in the Second Example. Thus, the water-permeable membrane was not formed on the surface of the water-selective adsorbent body.

### (Examples 1 to 5)

The water-selective adsorbents of Examples 1, 2, 3, 4, and 5 were produced in the same manner as in the Second Example, except that the water-permeable membranes had thicknesses of 45 µm, 105 µm, 220 µm, 390 µm, and 505 µm, respectively.

### (Measurement of Initial Adsorbed Water Amount)

The initial adsorbed water amount of the water-selective adsorbent of the Comparative Example was measured at a relative humidity of 90%.

In addition, the initial adsorbed water amounts of the water-selective adsorbents of Examples 1 to 5 were measured at a relative humidity of 90%.

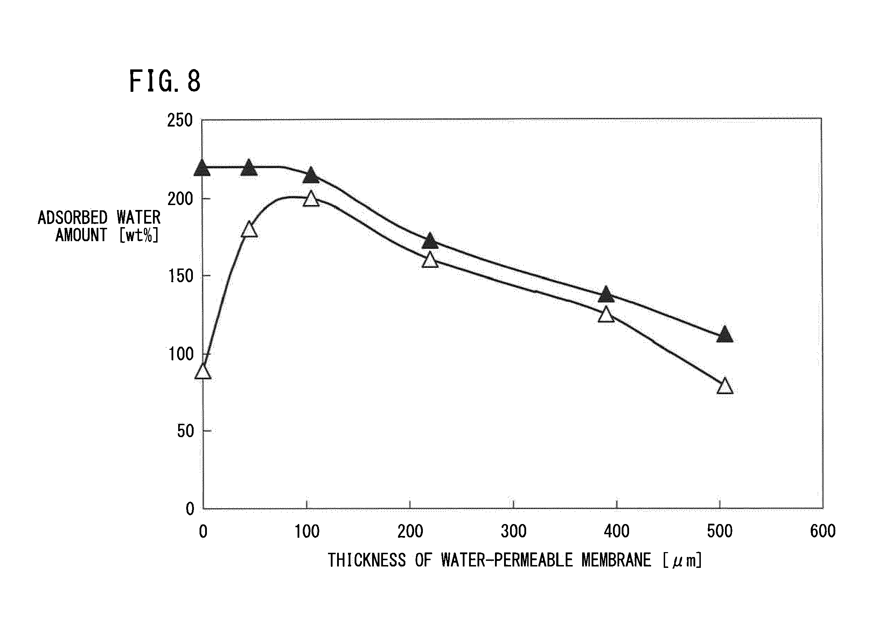

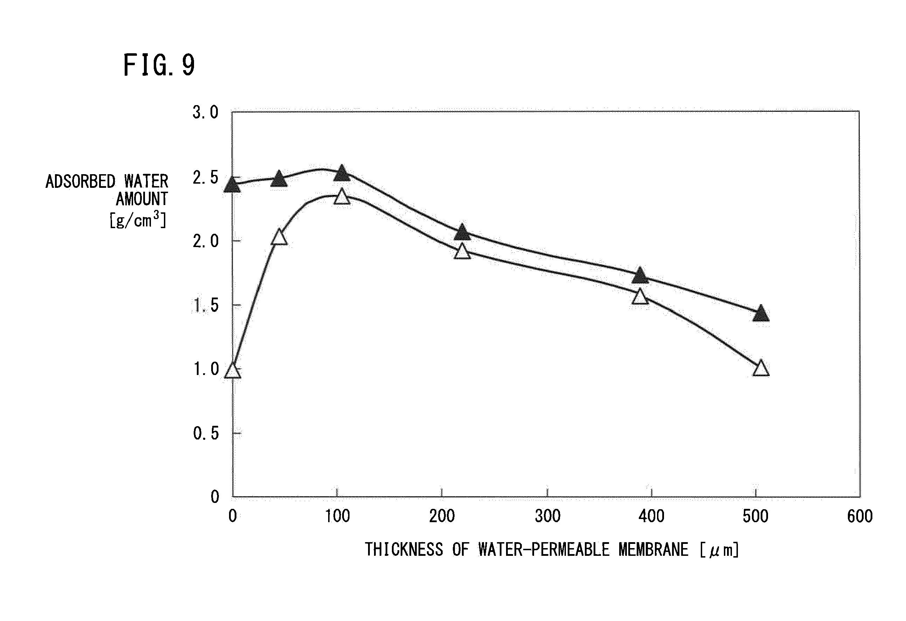

Mass ratios of the adsorbed water to the water-selective adsorbent, and densities, which were converted from the mass ratios, were obtained as the initial adsorbed water amounts of the Comparative Example and Examples 1 to 5, in the same manner as in the Second Example. Evaluation results of the initial adsorbed water amounts of the Comparative Example and Examples 1 to 5 are shown by the plotted black triangles ▲ in FIGS. 8 and 9.

### (Endurance Test)

Each of the water-selective adsorbents of the Comparative Example and Examples 1 to 5 was stored at 25 °C for 48 hours (in a water adsorption process) and then was stored at 120 °C for 48 hours (in a water desorption process) under a saturated water vapor pressure. The water adsorption and desorption cycle was repeated 10 times.

### (Measurement of Adsorbed Water Amount After Endurance Test)

The adsorbed water amount of the water-selective adsorbent of the Comparative Example after the endurance test was measured at a relative humidity of 90%.

In addition, the adsorbed water amounts of the water-selective adsorbents of Examples 1 to 5 after the endurance test were measured at a relative humidity of 90%.

The adsorbed water amounts (water mass ratios and densities) of the Comparative Example and Examples 1 to 5 after the endurance test were obtained in the same manner as the initial adsorbed water amounts. Evaluation results of the adsorbed water amounts after the endurance test of the Comparative Example and Examples 1 to 5 are shown by the plotted white triangles Δ in FIGS. 8 and 9.

### (Evaluation)

As shown in FIG. 8, the adsorbed water amount after the endurance test of the Comparative Example was 89 wt%, while the adsorbed water amounts after the endurance test of Examples 1 to 3 were more than 150 wt%. The adsorbed water amount after the endurance test of Example 2 was twice as large as that of the Comparative Example. Also, in the case of being converted into densities, similar results were obtained. As shown in FIG. 9, the density of the Comparative Example was 0.99 g/cm³, while the densities of Examples 1 to 4 were greater than 1.5 g/cm³. The adsorbed water amounts of Examples 1 and 3 were approximately 2 times greater, the adsorbed water amount of Example 2 was approximately 2.5 times greater, and the adsorbed water amount of Example 4 was approximately 1.5 times greater than the adsorbed water amount of the Comparative Example.

Furthermore, as shown in FIGS. 8 and 9, in the Comparative Example, the adsorbed water amount was reduced by the endurance test to about 40% of the initial amount. In contrast, in Examples 1 to 5, the adsorbed water amounts were reduced only slightly by the endurance test to about 82% to 96% of the initial amounts.

Although the adsorbed water amount after the endurance test of Example 5 was approximately equal to that of the Comparative Example, the adsorbed water amount of Example 5 was reduced only slightly by the endurance test to about 71% of the initial amount. Thus, Example 5 was superior to the Comparative Example in terms of maintaining the water amount.

### (Consideration)

As made clear from the Third Example, in view of preventing leakage of the deliquescent substance 16, the thickness of the water-permeable membrane should be 30 to 505 µm. The thickness of the water-permeable membrane preferably is 30 to 300 µm, more preferably, is 45 to 170 µm, even more preferably, is 80 to 130 µm, and particularly preferably, is 90 to 110 µm.

It should be understood that the water-selective adsorbent and the production method of the present invention are not limited to the above embodiment, and various changes and modifications may be made to the embodiment without departing from the scope of the invention.

## Claims

1. A water-selective adsorbent comprising:
a water-selective adsorbent body (18) containing a porous solid (14) having a large number of pores (12), and at least one deliquescent substance (16) located in the pores (12) of the porous solid (14); and
a water-permeable membrane (20) formed on a surface of the water-selective adsorbent body (18) in such a manner that at least the pores (12) thereof are closed.

2. The water-selective adsorbent according to claim 1, wherein the water-permeable membrane (20) has a thickness of 30 to 505 µm.

3. The water-selective adsorbent according to claim 1, wherein the pores (12) in the water-selective adsorbent body (18) have an average diameter of 2.0 to 10.6 µm.

4. The water-selective adsorbent according to claim 1, wherein the water-permeable membrane (20) includes a material containing a binding agent and a water-selective permeating agent capable of selectively permeating water molecules.

5. The water-selective adsorbent according to claim 4, wherein the water-selective permeating agent contains one of A-type zeolite, X-type zeolite, Y-type zeolite, P-type zeolite, mordenite, clinoptilolite, allophane, imogolite, and activated carbon.

6. The water-selective adsorbent according to claim 4, wherein:
the binding agent contains a combination of a first binder and a second binder; and
the first binder is water glass, and the second binder is a binder corresponding to the water glass.

7. The water-selective adsorbent according to claim 6, wherein the combination of the first binder and the second binder is a combination in which the first binder is Li₄SiO₄ and the second binder is LiOH, a combination in which the first binder is Na₂SiO₃ and the second binder is NaOH, a combination in which the first binder is K₂SiO₃ and the second binder is KOH, a combination in which the first binder is CaSiO₃, Ca₂SiO₄, or Ca₃SiO₅ and the second binder is Ca(OH)₂, or a combination in which the first binder is Mg₂Si₃O₈ and the second binder is Mg(OH)₂.

8. The water-selective adsorbent according to claim 1, wherein the porous solid (14) contains one of silica gel, calcined alumina, calcined sepiolite, calcined halloysite, calcined allophane, calcined palygorskite, and calcined cordierite.

9. The water-selective adsorbent according to claim 1, wherein the deliquescent substance (16) contains one of calcium chloride, magnesium chloride, lithium chloride, sodium chloride, potassium chloride, and lithium bromide.

10. A method for producing a water-selective adsorbent, comprising:
a body preparation step of preparing a water-selective adsorbent body (18) containing a porous solid (14) having a large number of pores (12), and at least one deliquescent substance (16) located in the pores (12) of the porous solid (14); and
a membrane formation step of forming a water-permeable membrane (20) on a surface of the water-selective adsorbent body (18) in such a manner that at least the pores (12) thereof are closed.

11. The method according to claim 10, wherein the membrane formation step further comprises:
a first drying step of drying the water-selective adsorbent body (18);
a coating step of coating the water-selective adsorbent body (18) with a material containing a binding agent and a water-selective permeating agent capable of selectively permeating water molecules; and
a second drying step of drying the water-selective adsorbent body (18) which is coated with the material.

12. The method according to claim 11, wherein the binding agent contains a combination of a first binder and a second binder, and the coating step further comprises:
a gel preparation step of preparing a gel containing the water-selective permeating agent and the first binder;
a first immersion step of immersing the water-selective adsorbent body (18) in the gel; and
a second immersion step of immersing the water-selective adsorbent body (18) in a solution of the second binder.

13. The method according to claim 12, wherein the water-selective permeating agent contains one of A-type zeolite, X-type zeolite, Y-type zeolite, P-type zeolite, mordenite, clinoptilolite, allophane, imogolite, and activated carbon.

14. The method according to claim 12, wherein the first binder is water glass, and the second binder is a binder corresponding to the water glass.

15. The method according to claim 14, wherein the combination of the first binder and the second binder is a combination in which the first binder is Li₄SiO₄ and the second binder is LiOH, a combination in which the first binder is Na₂SiO₃ and the second binder is NaOH, a combination in which the first binder is K₂SiO₃ and the second binder is KOH, a combination in which the first binder is CaSiO₃, Ca₂SiO₄, or Ca₃SiO₅ and the second binder is Ca(OH)₂, or a combination in which the first binder is Mg₂Si₃O₈ and the second binder is Mg(OH)₂.

16. The method according to claim 10, wherein the porous solid (14) contains one of silica gel, calcined alumina, calcined sepiolite, calcined halloysite, calcined allophane, calcined palygorskite, and calcined cordierite.
